(19) Europäisches Patentamt
European Patent Office
Office européen des brevets

(11) **EP 2 357 374 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(51) Int Cl.:
*F16C 32/04* *(2006.01)*   *G01B 7/14* *(2006.01)*
*G01D 5/20* *(2006.01)*

(21) Anmeldenummer: **10194742.2**

(22) Anmeldetag: **13.12.2010**

(54) **Magnetische Lagervorrichtung**

Magnetic bearing device

Dispositif de palier magnétique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2010 EP 10152085**

(43) Veröffentlichungstag der Anmeldung:
**17.08.2011 Patentblatt 2011/33**

(73) Patentinhaber: **Levitronix GmbH**
**8005 Zürich (CH)**

(72) Erfinder: **Nussbaumer, Thomas**
**8004, Zürich (CH)**

(74) Vertreter: **Intellectual Property Services GmbH**
**Langfeldstrasse 88**
**8500 Frauenfeld (CH)**

(56) Entgegenhaltungen:
EP-A1- 1 793 207   DE-A1- 4 215 381
DE-A1- 19 539 975   US-A- 4 652 820
US-A1- 2004 164 632   US-A1- 2007 229 064
US-B1- 6 350 109

**Beschreibung**

Die Erfindung betrifft eine magnetische Lagervorrichtung gemäss dem Oberbegriff des unabhängigen Patentanspruchs.

Magnetische Lagervorrichtungen zur berührungsfreien Lagerung eines Rotors, z.B. der Rotor in einem Elektromotor, rotierende Wellen, Pumpenrotoren, Mischer, Rührvorrichtungen, usw. gewinnen in vielen Bereichen immer mehr an Bedeutung. So werden beispielsweise Wafer in der Halbleiterherstellung bzw. Wafer Chucks magnetisch gelagert, um auf den rotierenden Wafer Photolacke oder ähnliches aufzubringen. Auch im Bereich der Bioreaktoren finden sich zunehmend magnetische Lagerungen, um das Rühr-, Pump- oder Mischelement im Bioreaktor ohne mechanischen Kontakt durch die Reaktorwand hindurch schwebend zu lagern.

Eine besondere Form einer magnetischen Lagervorrichtung stellt ein sogenannter lagerloser Motor dar. Dies ist ein elektromagnetischer Drehantrieb mit magnetisch gelagertem Rotor, bei welchem der Stator als Lager- und Antriebsstator für die magnetische Lagerung des Rotors und den Antrieb der Rotation des Rotors um die Drehachse ausgestaltet ist. Häufig ist dabei der Rotor permanentmagnetisch und/oder scheiben- oder ringförmig ausgebildet.

Ein solcher lagerloser Motor wird beispielsweise in der EP-A-0 860 046 und auch in der EP-A-0 819 330 offenbart. Mit dem Begriff lagerloser Motor ist gemeint, dass der Rotor vollkommen magnetisch gelagert ist, wobei keine separaten Magnetlager vorgesehen sind. Der Stator ist dazu als Lager- und Antriebsstator ausgestaltet, er ist also sowohl Stator des elektrischen Antriebs als auch Stator der magnetischen Lagerung. Dazu umfasst die Wicklung des Stators eine Antriebswicklung der Polpaarzahl p sowie eine Steuerwicklung der Polpaarzahl $p \pm 1$. Mit diesen beiden Wicklungen lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist. Somit sind drei Freiheitsgrade des Rotors aktiv regelbar. Bezüglich dreier weiterer Freiheitsgrade, nämlich seiner axialen Auslenkung in Richtung der Drehachse und Verkippungen bezüglich der zur Drehachse A senkrechten Ebene (zwei Freiheitsgrade) ist der Rotor passiv magnetisch, das heisst nicht ansteuerbar, durch Reluktanzkräfte stabilisiert. Bezüglich weiterer Details eines solchen lagerlosen Motors sei hier auf die bereits zitierten Dokumente verwiesen.

Der lagerlose Motor kann als Innenläufer, das heisst mit innenliegendem Rotor und darum herum angeordneten Stator, oder als Aussenläufer, das heisst mit innenliegendem Stator und darum herum angeordneten Rotor ausgestaltet sein.

Eine besondere Bedeutung kommt bei magnetischen Lagervorrichtungen den Sensoren zu, mit welchen die Position des Rotors relativ zum Stator gemessen wird, denn diese Information ist für die Regelung der Rotorlage notwendig. Üblicherweise wird die Rotorposition durch berührungslos arbeitende Abstandssensoren ermittelt, mit welchen die Rotorlage in der zur Solldrehachse senkrechten X-Y-Ebene bestimmt wird, wobei beispielsweise für die X- und die Y-Richtung mindestens ein Abstandssensor vorgesehen ist. Als Sensoren sind beispielsweise induktive Sensoren, Wirbelstromsensoren oder Magnetfeldsonden wie Hall-Sensoren oder magnetoresistive Sonden bekannt.

DE 195 39 975 A1 offenbart ein Magnetlager mit Wirbelstromsensoren.

Massgeblich für die Güte bzw. die Stabilität der Positionsregelung ist das Signal-zu-Rausch-Verhältnis (SNR: signal to noise ratio) des Sensors. Hiermit können in der Praxis grosse Probleme auftreten, denn die Umgebung, in welcher der Sensor arbeitet, ist keinesfalls optimal. Es herrschen starke magnetische Wechselfelder - diese sind besonders ausgeprägt wenn neben der magnetischen Lagerung zusätzlich ein Antriebsmoment erzeugt wird, um den Rotor in Drehung zu versetzen. Zudem müssen in der Regel hohe Ströme und hohe Spannungen geschaltet werden. Die hiermit einhergehenden Strom- und Spannungsänderungen verursachen elektromagnetische Wechselfelder, die zu einer hohen Störeinkopplung in den Sensor führen, was gleichbedeutend mit einem hohen Rauschpegel ist. Gleichzeitig ist häufig die Kopplung des Sensors mit dem zu messenden Medium - in der Regel ist das der Rotor - schwach. Beispielsweise führt bei Anwendungen, bei denen die Breite d des Luftspalts zwischen Rotor und Stator gross ist, z.B. 7-10 mm, die 1/d-Abhängigkeit der Induktivität eines induktiven Sensors zu extrem schwachen Signalen, sodass insgesamt das SNR auf einen so niedrigen Wert absinkt, dass eine zuverlässige Lageregelung - wenn überhaupt - nur noch mit sehr hohem Aufwand realisierbar ist.

Ein weiterer kritischer Fall für die Regelung der Rotorlage ist es, wenn zwischen dem Rotor und dem Stator ein metallisches Medium, z. B. eine Metallwand vorgesehen ist. Dies kann beispielsweise in Bioreaktoren oder in Mischern der Fall sein, bei denen sich der Rotor in einem Stahl- oder Metallbehälter befindet und der Stator den Metallbehälter umgibt, um den Rotor durch die Metallwand hindurch magnetisch zu lagern. In solchen Fällen muss die berührungslose Abstandsmessung durch die Metallwand hindurch erfolgen, was insbesondere bei Metallen mit relativ niedriger Leitfähigkeit, z.B. hochlegiertes Titan oder hochlegierter Chromstahl mit einem hohen Nickelanteil, zu ganz erheblichen Problemen führen kann.

Ausgehend von diesem Stand der Technik ist es daher eine Aufgabe der Erfindung, eine magnetische Lagervorrichtung vorzuschlagen, die in einfacher Weise eine zuverlässige Kontrolle der Position des Rotors ermöglicht, insbesondere auch unter schwierigen Betriebsbedingungen wie beispielsweise grossen Luftspalten zwischen Rotor und Stator.

Die diese Aufgabe lösende magnetische Lagervorrichtung ist durch die Merkmale des unabhängigen Patentanspruchs gekennzeichnet.

Erfindungsgemäss wird also eine magnetische Lagervorrichtung vorgeschlagen, mit einem Stator, der eine Wicklung zum Erzeugen eines magnetischen Steuerfelds umfasst, mit einem Rotor, der bezüglich des Stators magnetisch lagerbar ist, sowie mit einer als Wirbelstromsensor ausgestalteten Sensoreinrichtung zur Bestimmung des Abstands zwischen dem Stator und dem Rotor, wobei die Sensoreinrichtung mindestens ein als Induktivität ausgestaltetes Sensorelement umfasst, und mindestens eine Kapazität, die mit der Induktivität einen elektrischen Schwingkreis bildet, sowie mit einer Kontrolleinheit zur Ansteuerung der Sensoreinrichtung und zur Auswertung der erfassten Signale. Die Induktivität ist elektrisch seriell zur Kapazität angeordnet, sodass der elektrische Schwingkreis ein Serienschwingkreis ist.

Dadurch, dass der Wirbelstromsensor einen elektrischen Serienschwingkreis umfasst, bei welchem die Induktivität und die Kapazität elektrisch in Serie geschaltet sind, lässt sich bei resonanter Anregung ein vielfach verstärktes Mess- oder Antwortsignal generieren, wodurch ein deutlich günstigeres Signal-zu-Rausch-Verhältnis resultiert. Der Signalhub der Sensoreinrichtung lässt sich bei der erfindungsgemässen Lagervorrichtung um einen Faktor 10 bis 50 erhöhen. Dies ermöglicht eine wesentlich präzisere, stabilere Kontrolle bzw. Regelung der Rotorposition, sowie Anwendungen, die mit bisher bekannten Wirbelstromsensoren - zumindest in einfacher Weise - nicht möglich sind.

Durch diese aufgrund des hohen SNR sehr empfindliche Sensoreinrichtung ist vorteilhafterweise auch eine magnetische Lagervorrichtung möglich, bei welcher zwischen dem Rotor und dem Stator eine metallische Wand vorgesehen ist. Mit der erfindungsgemässen Sensoreinrichtung ist nämlich eine Abstandsmessung durch eine Metallwand in zuverlässiger Weise möglich.

Die Erfindung eignet sich auch für metallische Gehäuse, beispielsweise Tanks von Mischern oder Bioreaktoren. In einer bevorzugten Ausführungsform ist daher bei der magnetische Lagervorrichtung zwischen dem Rotor und dem Stator ein metallisches Gehäuse vorgesehen.

Eine besonders vorteilhafte Massnahme ist es, wenn jedes Sensorelement als Luftspule ausgestaltet ist, die Spule also nicht mit einem Kernmaterial gefüllt ist. Hierdurch lassen sich Störungen vermeiden, die durch Änderungen in der magnetischen Permeabilität des Kernmaterials bei Änderungen der Magnetfelder hervorgerufen werden können.

Der Stator weist mehrere Statorzähne auf und jedes Sensorelement ist zwischen zwei benachbarten Statorzähnen angeordnet.

Eine vorteilhafte Massnahme besteht darin, eine gerade Anzahl von Sensorelementen vorzusehen, wobei sich jeweils zwei der Sensorelemente diametral gegenüberliegen. Diese Anordnung ermöglicht für jede Messrichtung - also beispielsweise die X-Richtung und die Y-Richtung eine Differenzmessung, wodurch sich systematische Fehler in der Abstandsmessung eliminieren lassen.

Vorzugsweise ermittelt die Kontrolleinheit für die Bestimmung des Abstands mindestens ein Differenzsignal, das sich aus der Differenz der Messsignale ergibt, die von zwei diametral gegenüberliegenden Sensorelementen stammen.

Um die Auswertung des Messsignals noch weiter zu verbessern, ist es bevorzugt, dass die Kontrolleinheit jeden elektrischen Schwingkreis der Sensoreinrichtung mit einem Anregesignal vorgebbarer Frequenz anregt und das von dem jeweiligen Schwingkreis stammende Messsignal mit einem Demodulationssignal demoduliert, wobei das Demodulationssignal die gleiche Frequenz hat wie das Anregesignal für den jeweiligen Schwingkreis. Hiermit lässt sich das in der Regel hochfrequente Anregungssignal aus dem Messsignal entfernen. Die Freruenz der Anregung liegt ungefähr bei der Resonanzfrequenz des jeweiligen elektrischen Schwingkreises.

Die Demodulation lässt sich verbessern, wenn das Demodulationssignal relativ zum Anregesignal eine Phasenverschiebung aufweist, insbesondere eine Phasenverschiebung von 90°.

Bei einem ersten Ausführungsbeispiel ist die magnetische Lagervorrichtung als Innenläufer ausgestaltet, bei welchem der Rotor innerhalb des Stators angeordnet ist.

Bei einem zweiten Ausführungsbeispiel ist die magnetische Lagervorrichtung als Aussenläufer ausgestaltet, bei welchem der Stator innerhalb des Rotors angeordnet ist

Der Rotor ist bevorzugt permanentmagnetisch ausgestaltet.

Auch sind solche Ausführungsformen bevorzugt, bei welchen der Rotor scheiben- oder ringförmig ausgestaltet ist.

Eine besonders bevorzugte Ausgestaltung der magnetischen Lagervorrichtung ist es, wenn die Lagervorrichtung als lagerloser Motor ausgebildet ist, bei welcher der Stator als Lager- und Antriebsstator ausgestaltet ist, und der Rotor den Rotor des lagerlosen Motors bildet.

Weiter vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:

Fig. 1:    eine schematische Darstellung eines ersten Ausführungsbeispiels einer erfindungsgemässen magnetischen Lagervorrichtung,

Fig.2: eine schematische Darstellung einer Sensoreinrichtung, und

Fig. 3: eine schematische Darstellung eines zweiten Ausführungsbeispiels einer erfindungsgemässen magnetischen Lagervorrichtung.

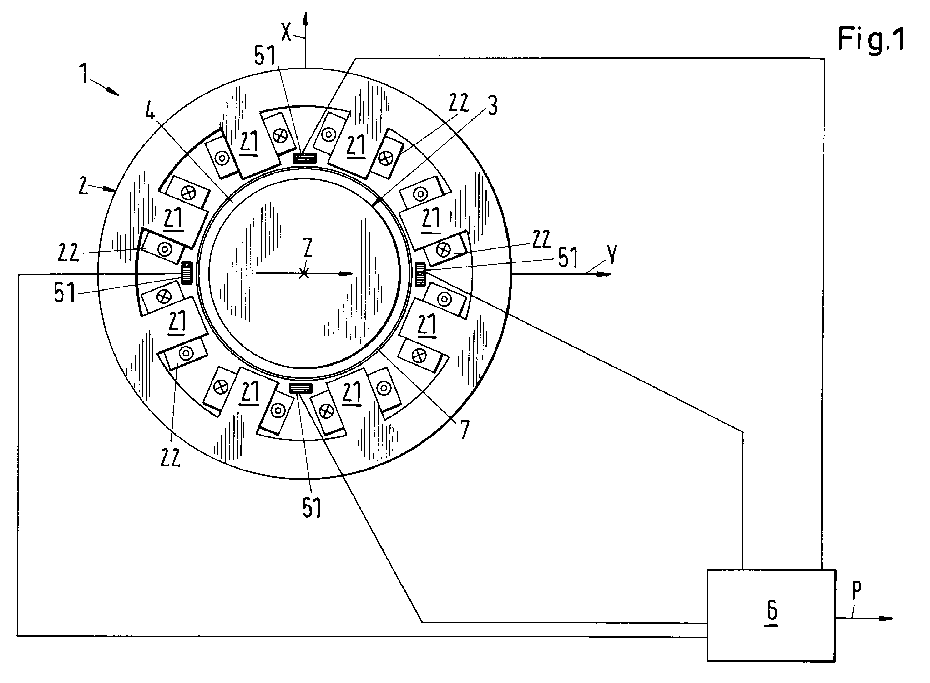

Fig. 1 zeigt in einer schematischen Darstellung wesentliche Teile eines ersten Ausführungsbeispiels einer erfindungsgemässen magnetischen Lagervorrichtung, die gesamthaft mit dem Bezugszeichen 1 bezeichnet ist. Im speziellen ist die Lagervorrichtung 1 als lagerloser Motor ausgestaltet, was weiter hinten noch erläutert wird.

Die erfindungsgemässe magnetische Lagervorrichtung 1 umfasst einen Stator 2 und einen Rotor 3, der bezüglich des Stators 2 magnetisch lagerbar ist.

Bei dem ersten Ausführungsbeispiel ist die Lagervorrichtung 1 als Innenläufer ausgestaltet, das heisst der Rotor 3 ist innerhalb des Stators 2 angeordnet. Zwischen dem Rotor 3 und dem Stator 2 ist ein Luftspalt 4 vorgesehen. Der Stator 2 umfasst mehrere radial nach innen gerichtete Statorzähne 21, sowie eine Wicklung 22 zum Erzeugen eines magnetischen Steuerfeldes, die in Form mehrerer diskreter Spulen ausgestaltet ist, welche jeweils auf den Statorzähnen 21 angeordnet sind. Der Rotor 3 ist als scheibenförmiger, permanentmagnetischer Rotor 3 ausgestaltet, dessen Magnetisierung in Fig. 1 durch den Pfeil ohne Bezugszeichen angedeutet ist. Der Rotor 3 ist in der durch die Achsen X und Y festgelegten X-Y-Ebene angeordnet, die senkrecht auf der Z-Achse steht, welche mit der Solldrehachse des Rotors 3 zusammenfällt. Alternativ kann der Rotor 3 oder sein magnetischer Teil auch ringförmig ausgestaltet sein.

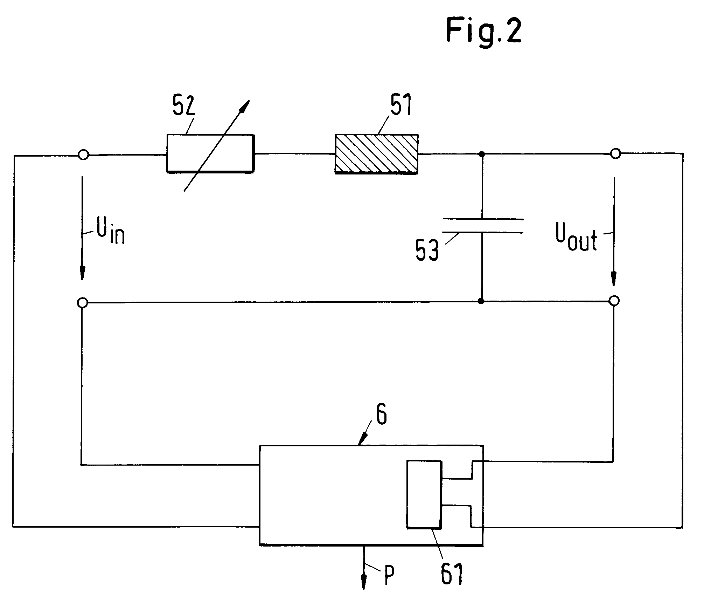

Ferner ist eine als Wirbelstromsensor ausgestaltete Sensoreinrichtung 5 (siehe auch Fig. 2) vorgesehen, um den Abstand zwischen dem Rotor 3 und dem Stator 2 zu ermitteln, sodass die relative Position des Rotors 3 innerhalb des Stators 2 bestimmbar ist. Die Sensoreinrichtung 5, auf die weiter hinten noch näher eingegangen wird, umfasst im ersten Ausführungsbeispiel vier Sensorelemente 51, von denen jedes jeweils zwischen zwei benachbarten Statorzähnen 21 angeordnet ist. Von den Sensorelementen 51 liegen sich jeweils zwei diametral gegenüber, das heisst bezüglich der Umfangsrichtung des Stators 2 um 180° versetzt zueinander. Die Sensorelemente 51 sind hier auf der positiven und der negativen X-Achse sowie auf der positiven und der negativen Y-Achse angeordnet, sodass durch eine Abstandsmessung in der X- und in der Y-Richtung die Position des Rotors 3 in der X-Y-Ebene bestimmbar ist.

Jedes der Sensorelemente 51 ist mit einer Kontrolleinheit 6 verbunden, welche die Sensoreinrichtung 5 ansteuert und die erfassten Signale der Sensorelemente 5 auswertet. Aus den von den Sensorelementen 51 erfassten Messsignalen generiert die Kontrolleinheit ein Positionssignal P, welches repräsentativ für die momentane Lage des Rotors 3 in der X-Y-Ebene ist, und welches dann einem nicht dargestellten Lage- bzw. Positionsregeler zugeführt wird.

Während des Betriebs der magnetischen Lagervorrichtung 1 wird mittels der Wicklung 22 des Stators 2 ein magnetisches Steuerfeld generiert, beispielsweise ein Drehfeld, welches den Rotor 3 in einer zentrierten Lage in der X-Y-Ebene berührungsfrei magnetisch lagert bzw. in der Schwebe hält. Die Position des Rotors wird dabei ständig mittels der Sensorelemente 51 der Sensoreinrichtung 5 kontrolliert und daraus das Positionssignal P generiert. Dazu werden die Messsignale der beiden gegenüberliegenden Sensorelemente voneinander subtrahiert, es wird also sowohl für die X-Richtung als auch für die Y-Richtung ein Differenzsignal zur Abstandsbestimmung gebildet. Das Messsignal des Sensorelements 51 in negativer X-Richtung wird von dem des Sensorelements in positiver X-Richtung subtrahiert. Eine analoge Differenzbildung erfolgt für die Y-Richtung. Durch die Bildung dieser Differenzsignale lassen sich systematische Fehler und offset-Fehler eliminieren. Das hieraus bestimmte Positionssignal P wird dann dem nicht dargestellten Lageregler zugeführt, der bei einer Abweichung des Rotors 3 von seiner Soll-Position das Steuerfeld so modifiziert, dass der Rotor 3 wieder in seine zentrierte Lage gelangt. Diese magnetische Lagerung und ihre Regelung ist dem Fachmann hinreichend bekannt und bedarf daher keiner weiteren Erläuterungen.

Wie bereits erwähnt ist die magnetische Lagervorrichtung 1 als elektromagnetischer Drehantrieb in Form eines lagerlosen Motors ausgestaltet, wobei der Begriff lagerloser Motor wie eingangs erläutert zu verstehen ist, nämlich, dass keine separaten Magnetlager für den Rotor 3 vorhanden sind. Der Stator 2 ist sowohl Lager- als auch Antriebsstator, mit welchem ein Drehmoment generierbar ist, das eine Rotation des Rotors 3 um die Drehachse Z antreibt und mit welchem der Rotor 3 magnetisch lagerbar ist. Dazu umfasst die Wicklung 22 des Stators 2 eine Antriebswicklung der Polpaarzahl p sowie eine Steuerwicklung der Polpaarzahl $p \pm 1$. Bezüglich seiner radialen Position, womit die Position in der X-Y-Ebene gemeint ist, ist der Rotor 3 aktiv magnetisch gelagert, das heisst die radiale Position des Rotors 3 ist über die Wicklung 22 des Stators 2 aktiv steuerbar bzw. regelbar. Bezüglich dreier weiterer Freiheitsgrade, nämlich seiner axialen Auslenkung in Richtung der Drehachse Z und Verkippungen bezüglich der zur Drehachse senkrechten X-Y-Ebene (zwei Freiheitsgrade) ist der Rotor 3 passiv magnetisch, das heisst nicht ansteuerbar, durch Reluktanzkräfte stabilisiert. Bezüglich weiterer Details des lagerlosen Motors sei hier auf die EP-A-0 860 046 und die EP-A-0 819 330 verwiesen.

Die Drehachse Z des Rotors 3, ist die Soll-Drehachse, um welche der Rotor 3 rotiert, wenn er bezüglich des Stators 2 zentriert ist und nicht verkippt ist.

Im Folgenden wird nun unter Bezugnahme auf Fig. 2 die Sensoreinrichtung 5 näher erläutert. Fig. 2 zeigt eine schematische Darstellung der Sensoreinrichtung 51, wobei aus Gründen der besseren Übersichtlichkeit nur eines der vier Sensorelemente 51 dargestellt ist. Das Sensorelement 51 ist als Induktivität ausgestaltet und zwar besonders bevorzugt als eine Luftspule. Die Induktivität des Sensorelements 51 wird mit L bezeichnet. Ferner ist eine Kapazität 53 vorgesehen deren Wert mit C bezeichnet wird, sowie ein ohmscher Widerstand 52, dessen Wert mit R bezeichnet wird und der als variabler Widerstand 52 ausgestaltet sein kann. Vorzugsweise ist der Widerstand 52 nicht als real vorhandenes seperates Bauteil vorhanden, sondern wird durch den ohmschen Widerstand der Luftspule 51 und/oder durch die ohmschen Widerstände ver Verbindungsleitungen realisiert. Die Induktivität, also das Sensorelement 51 und die Kapazität 53 bilden einen elektrischen Schwingkreis.

Erfindungsgemäss ist die Induktivität, also das Sensorelement 51, elektrisch seriell zur Kapazität 53 angeordnet, sodass der elektrische Schwingkreis ein Serienschwingkreis ist. Durch die Ausgestaltung der Sensoreinrichtung 5 als ein Wirbelstromsensor, der einen oder mehrere elektrische Serienschwingkreise umfasst, lässt sich ein deutlich besseres Signal-zu-Rausch-Verhältnis erzielen als mit bekannten Sensoreinrichtungen.

Die bereits erläuterte Differenzbildung der Messsignale zweier gegenüberliegender Sensorelemente erfolgt üblicherweise auch in der Kontrolleinheit 6, ist aber in Fig. 2 nicht dargestellt, weil hier nur ein Sensorelement 51 zu sehen ist.

Im Betriebszustand regt die Kontrolleinheit 6 über eine hochfrequente Wechselspannungsquelle den elektrischen Schwingkreis mit einem Anregesignal $U_{in}$, beispielsweise eine Wechselspannung, an. Die Frequenz des Anregesignals $U_{in}$ ist gleich oder in der Nähe der Resonanzfrequenz des elektrischen Schwingkreises, welche durch die Kreisfrequenz

$$\omega_0 = \left( L \cdot C \right)^{(-0.5)}$$

gegeben ist. Das von dem Schwingkreis kommende Antwort- oder Messsignal $U_{out}$ wird erfasst und der Kontrolleinheit 6 zugeführt. Dort wird die Amplitudenänderung und/oder die Phasenänderung oder auch andere Grössen des Messsignals bestimmt.

Für die komplexe Übertragungsfunktion G des Schwingkreises, die der Quotient aus $U_{out}$ und $U_{in}$ ist, gilt an der Resonanzfrequenz $\omega_0$

$$G = U_{out} / U_{in} = -i \cdot R^{-1} \cdot (L/C)^{0.5}$$

wobei i die imaginäre Einheit bezeichnet. Diese Abhängigkeit kann dazu genutzt werden, die Stärke des Messsignals $U_{out}$ zu optimieren.

Gemäss einer bevorzugten Ausführungsform wird das Messsignal $U_{out}$ in der Kontrolleinheit 6 von einem Demodulator 61 demoduliert. In der Regel erfolgt diese Demodulierung vor der Bildung des Differenzsignals. Die Demodulation erfolgt beispielsweise durch Multiplikation des Messsignals mit einem Demodulationssignal, welches die gleiche Frequenz hat, wie das Anregesignal $U_{in}$, mit welchem der Schwingkreis angeregt wird. Dabei ist es nicht notwendig, dass das Demodulationssignal ein sinusförmiges Signal ist, es kann durchaus auch höhere Harmonische enthalten. So kann das Demodulationssignal beispielsweise eine Rechteckspannung sein, deren Grundfrequenz die gleiche Frequenz ist wie die des Anregesignals, mit welchem der Schwingkreis angeregt wird. Durch diese Demodulation lässt sich der hochfrequente Anteil des Messsignals separieren und dann ausfiltern, beispielsweise mittels eines Tiefpasses.

In einer besonders bevorzugten Ausführungsform erfolgt die Demodulation phasenverschoben, das heisst das Demodulationssignal ist gegenüber dem Anregesignal in der Phase verschoben. Besonders bevorzugt beträgt diese Phasenverschiebung 90°, weil dies der Phasenverschiebung entspricht, die der elektrische Schwingkreis bei Anregung mit seiner Resonanzfrequenz zwischen dem Anregesignal und dem Messsignal verursacht.

Dadurch, dass der elektrische Schwingkreis ein Serienschwingkreis ist, kann die Messspannung $U_{out}$ grösser sein als die Spannung des Anregesignals $U_{in}$. In der Praxis hat es sich bewährt, wenn die Amplitude des Messsignals mindestens um einen Faktor 2 grösser ist als dier Amplitude des Anregesignals. Die Messspannung kann aber durchaus auch Werte von dem 10- bis 50-fachen der Spannung des Anregesignals erreichen. In der Kontrolleinheit 6 kann gegebenenfalls das Messsignal wieder auf einen technisch sinnvollen signalelektronischen Spannungswert herab skaliert werden, der dann als Positionsignal P ausgegeben wird.

Alternativ ist es natürlich auch möglich, das Messsignal an der Kapazität 53 zu detektieren.

Wie bereits erwähnt, sind die Sensorelemente 51 jeweils zwischen zwei benachbarten Statorzähnen 21 angeordnet. Die für den elektrischen Schwingkreis erforderlichen Kapazitäten können vorzugsweise auf einem Elektronikprint vorgesehen sein, auf welchem die Kontrolleinheit 6 oder auch andere Komponenten der magnetischen Lagervorrichtung vorgesehen sind, beispielsweise der Lageregler oder die Ansteuer- und Regelelektronik für den lagerlosen Motor bzw. die magnetische Lagervorrichtung.

Die Sensoreinrichtung 5 der erfindungsgemässen Lagervorrichtung ist von ihrem Prinzip her ein Wirbelstromsensor. Bei diesem Sensortyp für die Abstandsmessung ändert sich bei Variationen des Abstands zwischen Sensorelement und Rotor hauptsächlich der Realteil des komplexen Wechselstromwiderstands des Sensorelements. Dieser reagiert auf Änderungen der durch die Wirbelströme hervorgerufenen Magnetfelder.

Wie bereits erwähnt, sind die Sensorelemente 51 besonders bevorzugt Luftspulen, das heisst die Sensorelemente 51 haben kein (von Luft verschiedenes) Kernmaterial, um das die Spule herum gewickelt ist. Der von der Wicklung der Luftspule umschlossene Raum ist lediglich mit Luftgefüllt, aber nicht mit einem anderen Kernmaterial. Durch diese Massnahme wird vermieden, dass die magnetischen Eigenschaften des Kernmaterials zu Verfälschungen des Messsignals führen. Die starken Magnetfeldänderungen im Bereich der Sensorelemente 51 könnten die Permeabilität des Kernmaterials beeinflussen. Daher sind Luftspulen als Sensorelemente 51 bevorzugt.

Es hat sich gezeigt, dass die Verwendung von Luftspulen nicht nur für die erfindungsgemässe magnetische Lagervorrichtung vorteilhaft ist, sondern dass solche Luftspulen auch allgemein und unabhängig von der vorliegenden Erfindung in Sensoreinrichtungen vorteilhaft genutzt werden können, insbesondere in Sensoreinrichtungen, die in starken oder stark wechselnden Magnetfeldern eingesetzt werden. Speziell eignen sich Luftspulen für magnetische Abstandssensoren, insbesondere für Wirbelstromsensoren. Wird beispielsweise eine solche Luftspule mit einer Kapazität elektrisch in Serie zu einem Serienschwingkreis zusammengeschaltet, lassen sich Sensoren mit besonders hoher Empfindlichkeit realisieren.

Bei der erfindungsgemässen magnetischen Lagervorrichtung 1 ist die Sensoreinrichtung 5 so gut bzw. zeichnet sich durch ein so gutes Signal-zu-Rausch-Verhältnis aus, dass bisher auch sehr problematische Anwendungsfälle gut realisiert werden können. So kann beispielsweise eine magnetische Lagervorrichtung realisiert werden, bei welcher die Breite des Luftspalts 4 zwischen dem Stator 2 und dem Rotor 3 sehr gross ist, z. B. sieben bis zehn Millimeter oder noch mehr. Ein anderer bisher problematischer Anwendungsfall ist es, wenn zwischen dem Stator 2 und dem Rotor 3 eine Wand, speziell eine metallische Wand, oder ein metallisches Gehäuse vorgesehen ist. Dies kann beispielsweise bei Spaltrohrmotoren der Fall sein, oder in der Waferproduktion, oder bei Mischer- bzw. Rühreranwendungen. So kann beispielsweise in einer metallischen Prozesskammer oder einem metallischen Reaktions- oder Vorratsgefäss ein Rühr- oder Mischelement oder ein Chuck für einen Wafer vorgesehen sein, dass den Rotor 3 einer magnetischen Lagervorrichtung bildet. Der Stator 2 ist aussen um das Gefäss herum angeordnet und lagert und/oder rotiert den Rotor 3 magnetisch berührungslos durch die metallische Wand hindurch. Das Ausführungsbeispiel in Fig. 1 zeigt eine solche Wand 7 zwischen dem Rotor 3 und dem Stator 2.

Bei vielen Anwendungen sind solche metallischen Prozesskammern aus hochwertigen Metalllegierungen, die in der Regel eine für Metalle niedrige elektrische Leitfähigkeit aufweisen. Beispielsweise sind hochlegiertes Titan oder hochlegierterer Chromstahl mit hohem Nickelanteil häufig verwendete Legierungen. Insbesondere bei den Titanlegierungen werden Legierungen höheren Grades vor allem dazu verwendet, um die Festigkeit des Materials zu erhöhen. Mit dieser Erhöhung der Festigkeit geht eine Reduzierung der elektrischen Leitfähigkeit einher.

Neben den Legierungselementen Eisen und Kohlenstoff werden hauptsächlich Aluminium und Vanadium als Legierungselemente eingesetzt. Für bestimmte höhere Grade der Legierungen ist es bekannt, auch eines oder mehrere der folgenden Elemente zu verwenden: Zinn, Palladium, Molybdän, Nickel, Ruthenium, Chrom, Zirkonium, Niobium, Silizium, Kobalt.

Die erfindungsgemässe magnetische Lagervorrichtung 1 ermöglicht auch bei solchen metallischen Wänden noch eine zuverlässige und robuste Lagerung des Rotors 3. Mit der Sensoreinrichtung 5 der erfindungsgemässen Lagervorrichtungl kann eine präzise Abstandsmessung auch durch eine metallische Wand hindurch erfolgen, beispielsweise eine Wand von 0.5 bis 1 mm Dicke.

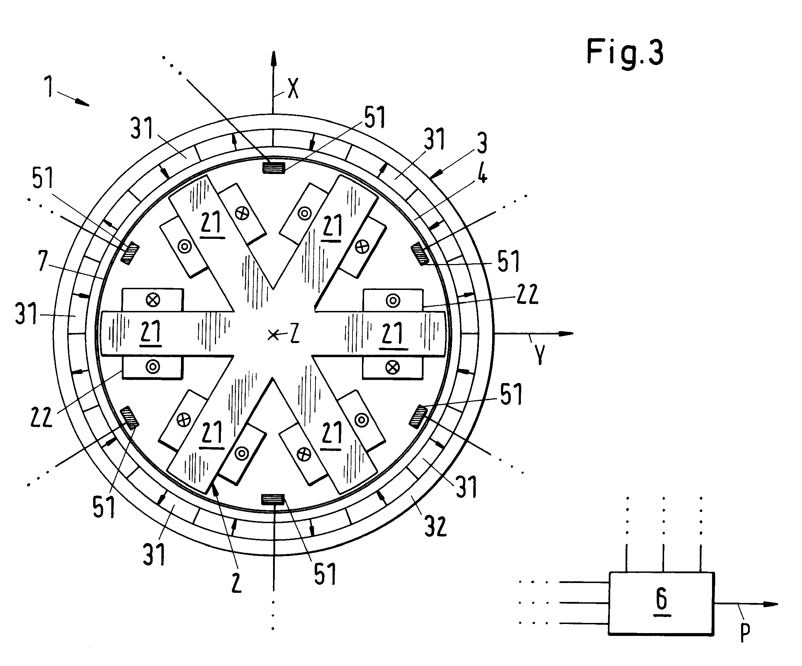

Fig. 3 zeigt in einer zu Fig. 1 analogen Darstellung ein zweites Ausführungsbeispiel einer erfindungsgemässen magnetischen. Lagervorrichtung 1. Von der Funktion her gleiche oder gleichwertige Teile sind bei dem zweiten Ausführungsbeispiel mit den gleichen Bezugszeichen bezeichnet wie beim ersten Ausführungsbeispiel. Im Folgenden werden die Unterschiede zwischen dem ersten und dem zweiten Ausführungsbeispiel erläutert. Die im Zusammenhang mit dem ersten Ausführungsbeispiel gegebenen Erklärungen sowie bevorzugte Ausgestaltungen und vorteilhafte Massnahmen gelten in sinngemäss gleicher Weise auch für das zweite Ausführungsbeispiel bzw. lassen sich auch bei dem zweiten Ausführungsbeispiel realisieren.

Bei dem zweiten Ausführungsbeispiel ist die magnetische Lagervorrichtung 1 als Aussenläufer ausgestaltet, bei welchem der Stator 2 innerhalb des Rotors angeordnet ist. Vorzugsweise ist auch bei dem zweiten Ausführungsbeispiel die magnetische Lagervorrichtung als lagerloser Motor ausgebildet.

Der Stator 2 umfasst hier sechs Statorzähne 21, die jeweils radial nach aussen gerichtet sind und jeweils diskrete Spulen tragen, welche in ihrer Gesamtheit die Wicklung 22 des Stators 2 bilden. Der Rotor 3 ist als ringförmiger, permanentmagnetischer Rotor 3 ausgestaltet und umgibt den Stator 2. Der Rotor umfasst eine Vielzahl permanentmagnetischer Segmente 31, deren Magnetisierung jeweils durch die kleinen Pfeile ohne Bezugszeichen angedeutet ist. Die permanentmagnetischen Segmente 31 sind wechselweise radial nach aussen und radial nach innen magnetisiert, sodass benachbarte permanentmagnetische Segmente 31 jeweils entgegengesetzt gerichtete Magnetisierungen aufweisen. Radial aussenliegend werden die permanentmagnetischen Segmente 31 von einem ringförmigen Eisenrückschluss 32 umgeben.

Im Luftspalt 4 zwischen dem Rotor 3 und dem Stator 2 kann auch bei dem zweiten Ausführungsbeispiel eine Wand 7, speziell eine metallische Wand 7 vorgesehen sein.

Bei dem zweiten Ausführungsbeispiel sind insgesamt sechs Sensorelemente 51 vorgesehen, die sich paarweise diametral gegenüberliegen. Die zum selben Paar gehörenden Sensorelemente 51 sind also bezüglich der Umfangsrichtung um 180° zueinander versetzt angeordnet. Jedes Sensorelement 51 ist jeweils zwischen zwei benachbarten Statorzähnen 21 angeordnet. Auch hier ist jedes Sensorelement 51 mit einer nicht dargestellten Kapazität jeweils elektrisch in Serie geschaltet, um jeweils einen elektrischen Serienschwingkreis zu bilden. Die Sensorelemente 51 sind vorzugsweise Luftspulen. Die Messung des Abstand in einer durch zwei Sensorelemente 51 festgelegten Richtung erfolgt auch hier durch Bildung eines Differenzsignals aus den Messsignalen der beiden jeweiligen Sensorelemente 51. Da hier die Abstandsmessung mit den sechs Sensorelementen in der X-Y-Ebene in drei Richtungen erfolgt, ergibt sich eine Rendundanz, die zum einen zu einer Präzisierung der Messung genutzt werden kann und zum anderen eine Fehlertoleranz ermöglicht falls eines oder mehrere der Sensorelemente 51 ausfallen.

**Patentansprüche**

1. Magnetische Lagervorrichtung mit einem Stator (2), der eine Wicklung (22) zum Erzeugen eines magnetischen Steuerfelds umfasst, mit einem Rotor (3), der bezüglich des Stators (2) magnetisch lagerbar ist, sowie mit einer als Wirbelstromsensor ausgestalteten Sensoreinrichtung (5) zur Bestimmung des Abstands zwischen dem Stator (2) und dem Rotor (3), wobei die Sensoreinrichtung (5) mindestens ein als Induktivität ausgestaltetes Sensorelement (51) umfasst, und mindestens eine Kapazität (53), die mit der Induktivität einen elektrischen Schwingkreis bildet, sowie mit einer Kontrolleinheit (6) zur Ansteuerung der Sensoreinrichtung (5) und zur Auswertung der erfassten Signale, **dadurch gekennzeichnet, dass** der Stator (2) mehrere Statorzähne (21) aufweist und jedes Sensorelement (51) zwischen zwei benachbarten Statorzähnen (21) angeordnet ist, und dass die Induktivität elektrisch seriell zur Kapazität (53) angeordnet ist, sodass der elektrische Schwingkreis ein Serienschwingkreis ist.

2. Magnetische Lagervorrichtung nach Anspruch 1, wobei zwischen dem Rotor (3) und dem Stator (2) eine metallische Wand (7) vorgesehen ist.

3. Magnetische Lagervorrichtung nach einem der vorangehenden Ansprüche, wobei zwischen dem Rotor (2) und dem Stator (3) ein metallisches Gehäuse (7) vorgesehen ist.

4. Magnetische Lagervorrichtung nach einem der vorangehenden Ansprüche wobei jedes Sensorelement (51) als Luftspule ausgestaltet ist.

5. Magnetische Lagervorrichtung nach einem der vorangehenden Ansprüche, bei welcher eine gerade Anzahl von Sensorelementen (51) vorgesehen ist, wobei sich jeweils zwei der Sensorelemente (51) diametral gegenüberliegen.

6. Magnetische Lagervorrichtung nach Anspruch 5, bei welcher die Kontrolleinheit (6) für die Bestimmung des Abstands mindestens ein Differenzsignal ermittelt, das sich aus der Differenz der Messsignale ergibt, die von zwei diametral gegenüberliegenden Sensorelementen stammen.

7. Magnetische Lagervorrichtung nach einem der vorangehenden Ansprüche, bei welchem die Kontrolleinheit (6) jeden elektrischen Schwingkreis der Sensoreinrichtung (5) mit einem Anregesignal ($U_{in}$) vorgebbarer Frequenz anregt und das von dem jeweiligen Schwingkreis stammende Messsignal ($U_{out}$) mit einem Demodulationssignal demoduliert, wobei das Demodulationssignal die gleiche Frequenz hat wie das Anregesignal ($U_{in}$) für den jeweiligen Schwingkreis.

8. Magnetische Lagervorrichtung nach Anspruch 7, bei welcher das Demodulationssignal relativ zum Anregesignal ($U_{in}$) eine Phasenverschiebung aufweist, insbesondere eine Phasenverschiebung von 90°.

9. Magnetische Lagervorrichtung nach einem der vorangehenden Ansprüche ausgestaltet als Innenläufer, bei welchem der Rotor (3) innerhalb des Stators (2) angeordnet ist.

10. Magnetische Lagervorrichtung nach einem der vorangehenden Ansprüche ausgestaltet als Aussenläufer, bei welchem der Stator (2) innerhalb des Rotors (3) angeordnet ist.

11. Magnetische Lagervorrichtung nach einem der vorangehenden Ansprüche, wobei der Rotor (3) permanentmagnetisch ausgestaltet ist.

12. Magnetische Lagervorrichtung nach einer der vorangehenden Ansprüche, bei welcher der Rotor (3) scheiben- oder ringförmig ausgestaltet ist.

13. Magnetische Lagervorrichtung nach einem der vorangehenden Ansprüche, ausgebildet als lagerloser Motor, bei welcher der Stator (2) als Lager- und Antriebsstator ausgestaltet ist, und der Rotor (3) den Rotor des lagerlosen Motors bildet.

**Claims**

1. A magnetic bearing apparatus having a stator (2) which includes a winding (22) for the generation of a magnetic control field, having a rotor (3) which can be magnetically journalled with respect to the stator (2), and also having a sensor device (5) configured as an eddy current sensor for the determination of the spacing between the stator (2) and the rotor (3), wherein the sensor device (5) includes at least one sensor element (51) configured as an inductor and at least one capacitor (53) which forms an electrical resonant circuit with the inductor, as well as having a control unit (6) for the control of the sensor device (5) and for the evaluation of the detected signals, **characterized in that** the stator (2) has a plurality of stator teeth (21) and each sensor element (51) is arranged between two adjacent stator teeth (21) and that the inductor is arranged electrically in series to the capacitor (53) so that the electrical resonant circuit is a serial resonant circuit.

2. A magnetic bearing apparatus in accordance with claim 1, wherein a metal wall (7) is provided between the rotor (3) and the stator (2).

3. A magnetic bearing apparatus in accordance with any one of the preceding claims, wherein a metal housing (7) is provided between the rotor (2) and the stator (3).

4. A magnetic bearing apparatus in accordance with any one of the preceding claims, wherein each sensor element (51) is configured as air core coil.

5. A magnetic bearing apparatus in accordance with any one of the preceding claims, wherein an even number of sensor elements (51) is provided, wherein in each case two of the sensor elements (51) are disposed diametrically opposite one another.

6. A magnetic bearing apparatus in accordance with claim 5, wherein the control unit (6) for the determination of the spacing determines at least one difference signal which results from the difference of the measured signals which originate from two diametrically opposed sensor elements.

7. A magnetic bearing apparatus in accordance with any one of the preceding claims, wherein the control unit (6) excites each electrical resonant circuit of the sensor device (5) with an excitation signal ($U_{in}$) of a presettable frequency and demodulates the measured signal ($U_{out}$) originating from the respective resonant circuit with a demodulation signal, wherein the demodulation signal has the same frequency as the excitation signal ($U_{in}$) for the respective resonant circuit.

8. A magnetic bearing apparatus in accordance with claim 7, wherein the demodulation signal has a phase shift, in particular a phase shift of 90°, relative to the excitation signal ($U_{in}$).

9. A magnetic bearing apparatus in accordance with any one of the preceding claims configured as an inner rotor in which the rotor (3) is arranged within the stator (2).

10. A magnetic bearing apparatus in accordance with any one of the preceding claims configured as an outer rotor in which the stator (2) is arranged within the rotor (3).

11. A magnetic bearing apparatus in accordance with any one of the preceding claims, wherein the rotor (3) is configured as permanently magnetic.

12. A magnetic bearing apparatus in accordance with any one of the preceding claims, wherein the rotor (3) is configured as disk-shaped or ring-shaped.

13. A magnetic bearing apparatus in accordance with any one of the preceding claims configured as a bearingless motor, wherein the stator (2) is configured as a bearing stator and drive stator and the rotor (3) forms the rotor of the bearingless motor.

**Revendications**

1. Dispositif formant palier magnétique avec un stator (2) qui comprend un enroulement (22) pour la génération d'un champ magnétique de commande, avec un rotor (3) qui est adapté pour être supporté de manière magnétique par rapport au stator (2), ainsi qu'avec un dispositif de capteur (5) sous la forme d'un capteur de courant de Foucault pour déterminer la distance entre le stator (2) et le rotor (3), le dispositif de capteur (5) comprenant au moins un élément de capteur (51) sous la forme d'une inductance, et au moins une capacitance (53) formant avec l'inductance un circuit électrique de résonance, ainsi qu'avec une unité de contrôle (6) pour la commande du dispositif de capteur (5) et pour l'exploitation des signaux captés, **caractérisé en ce que** le stator (2) comprend plusieurs dents de stator (21) et que chaque élément de capteur (51) est disposé entre deux dents de stator (21) avoisinantes, et **en ce que** l'inductance est disposée électriquement en série avec la capacitance (53), si bien que le circuit électrique de résonance est un circuit de résonance série.

2. Dispositif formant palier magnétique selon la revendication 1, où une paroi métallique (7) est prévue entre le rotor (3) et le stator (2).

3. Dispositif formant palier magnétique selon l'une quelconque des revendications précédentes, où un boîtier métallique (7) est prévu entre le rotor (3) et le stator (2).

4. Dispositif formant palier magnétique selon l'une quelconque des revendications précédentes, où chaque élément de capteur (51) est formé comme enroulement sans fer.

5. Dispositif formant palier magnétique selon l'une quelconque des revendications précédentes, où un nombre pair d'éléments de capteur (51) est prévu, à chaque fois deux des éléments de capteur (51) étant disposés diamétralement opposés.

6. Dispositif formant palier magnétique selon la revendication 5, où l'unité de contrôle (6) obtient, pour déterminer la distance, au moins un signal différentiel qui résulte de la différence entre les signaux de mesure provenant de deux éléments de capteur disposés diamétralement opposés.

7. Dispositif formant palier magnétique selon l'une quelconque des revendications précédentes, où l'unité de contrôle (6) excite chaque circuit de résonance électrique du dispositif de capteur (5) avec un signal d'excitation ($U_{in}$) ayant une fréquence pouvant être prédéterminée et démodule le signal de mesure ($U_{out}$) provenant du circuit de résonance respectif avec un signal de démodulation, le signal de démodulation ayant la même fréquence que le signal d'excitation ($U_{in}$) pour le circuit de résonance respectif.

8. Dispositif formant palier magnétique selon la revendication 7, où le signal de démodulation présente un déphasage par rapport au signal d'excitation ($U_{in}$), notamment un déphasage de 90°.

9. Dispositif formant palier magnétique selon l'une quelconque des revendications précédentes formé comme dispositif à rotor intérieur, où le rotor (3) est disposé à l'intérieur du stator (2).

10. Dispositif formant palier magnétique selon l'une quelconque des revendications précédentes formé comme dispositif à rotor extérieur, où le stator (2) est disposé à l'intérieur du rotor (3).

11. Dispositif formant palier magnétique selon l'une quelconque des revendications précédentes, où le rotor (3) présente une magnétisation permanente.

12. Dispositif formant palier magnétique selon l'une quelconque des revendications précédentes, où le rotor (3) est formé sous la forme d'un disque ou d'un anneau.

13. Dispositif formant palier magnétique selon l'une quelconque des revendications précédentes, formé comme moteur sans palier, où le stator (2) est formé comme stator palier et stator d'entraînement et le rotor (3) forme le rotor du moteur sans palier.

Fig.1

EP 2 357 374 B1

Fig.2

Fig.3

EP 2 357 374 B1

**IN DER BESCHREIBUNG AUFGEFÜHRTE DOKUMENTE**

**In der Beschreibung aufgeführte Patentdokumente**

- EP 0860046 A
- EP 0819330 A

- DE 19539975 A1